# EUROPEAN PATENT SPECIFICATION

(11) **EP 4 273 800 B1**
(45) Date of publication and mention of the grant of the patent: **24.09.2025**
(21) Application number: 22172151.7
(22) Date of filing: 06.05.2022
(51) Int. Cl.: G06T 7/50

(54) **METHOD AND LABORATORY SYSTEM FOR DETERMINING AT LEAST ONE CONTAINER INFORMATION ABOUT A LABORATORY SAMPLE CONTAINER**
VERFAHREN UND LABORSYSTEM ZUR BESTIMMUNG MINDESTENS EINER BEHÄLTERINFORMATION ÜBER EINEN LABORPROBENBEHÄLTER
PROCÉDÉ ET SYSTÈME DE LABORATOIRE PERMETTANT DE DÉTERMINER AU MOINS DES INFORMATIONS DE RÉCIPIENT RELATIVES À UN RÉCIPIENT D'ÉCHANTILLONS DE LABORATOIRE

(43) Date of publication of application: 08.11.2023
(73) Proprietor: Roche Diagnostics GmbH, 68305 Mannheim (DE); F. Hoffmann-La Roche AG, 4070 Basel (CH)
(72) Inventor: WIEGAND, Friederike, 71636 Ludwigsburg (DE); REIN, Michael, 71636 Ludwigsburg (DE)
(74) Representative: Patentanwälte Ruff, Wilhelm, Beier, Dauster & Partner mbB

(56) References cited:
- JP-A- 2019 504 997
- US-A1- 2016 018 427
- US-A1- 2019 108 396
- US-A1- 2019 306 489
- US-A1- 2021 287 370

## Description

### TECHNICAL FIELD AND PRIOR ART

The invention relates to a method and a laboratory system, in particular each, for determining at least one container information about a laboratory sample container.

US 2019/0108396 A1 discloses a method for identifying and tracking objects including: capturing one or more 3-D models of one or more objects in a scene using a three-dimensional (3-D) scanning system, the one or more 3-D models including color and geometry information of the one or more objects; and computing, by an analysis agent, one or more descriptors of the one or more 3-D models, each descriptor corresponding to a fixed-length feature vector; and retrieving metadata identifying the one or more objects based on the one or more descriptors.

US 2016/0018427 A1 discloses, that container identification data from a container inspection unit that analyzes a container containing a liquid is combined with liquid level detection raw data from a liquid level detection unit that analyzes the container containing the liquid and a liquid level detection result is generated. The liquid level detection result is cross-checked with additional data from the container inspection unit. The result can be used to plan a route for the container in the laboratory automation system.

JP 2019504997 A discloses methods and apparatus adapted to quantify a specimen from multiple lateral views.

### SUMMARY OF THE INVENTION

It is the object of the invention to provide a method and a laboratory system, in particular each, for determining at least one container information about a laboratory sample container, in particular having improved properties.

This object is solved by a method and a laboratory system as defined in the independent claims. Preferred embodiments are defined in the dependent claims.

The invention relates to a method for determining at least one container information about a laboratory sample container, wherein the method comprises the steps:
a) acquiring an image comprising a brightness and/or color information of a possible or potential, respectively, region of the container,
b) acquiring a map comprising a depth information of the, in particular same or identical, respectively, region, and
c) determining the container information by fusing the brightness and/or color information and the depth information, in particular with each other.

This, in particular the fusing the brightness and/or color information and the depth information, enables determining the container information, in particular and thus inspecting the container, accurately and/or completely and/or reliably and/or with less uncertainty, in particular than would be possible when only one such information was used individually.

In particular the method, the determining, the acquiring and/or the fusing may be automatically.

The phrase "container property of" may be used synonymously for the phrase "container information about". In particular the property may be a physical property.

The, in particular respective, information may comprise a content and/or a value.

The term "having" may be used synonymously for the term "comprising".

The container may be made of glass or, in particular transparent and/or colorless, plastic or any other, in particular somewhat, solid material. Additionally or alternatively the container may be configured as a tube.

The term "capturing" may be used synonymously for the term "acquiring".

The image and the map may be acquired from a, in particular same or identical, viewpoint. Additionally or alternatively the image and/or the map may be digital.

The image may be a brightness and/or color image. Additionally or alternatively the image may be two-dimensional.

The term "representing" or "containing" may be used synonymously for the term "comprising".

The brightness information may be a brightness information of a, in particular given, color/s.

The term "data" may be used synonymously for the term "information".

The container may be present in the possible region. Additionally or alternatively a container carrier for carrying, in particular for transporting, the container may be present in the possible region. In particular, an empty carrier may be present in the possible region in which the container could also be expected. Additionally or alternatively the carrier may have a white color.

The map may be a depth map. In particular the phrase "depth profile" may be used synonymously for the term "depth map". Additionally or alternatively the map may be three-dimensional or have two dimensions and one additional, third dimension, wherein the third dimension may relate to a height over a plane defined by the other two dimensions, or indicate how an upper surface of a specific region changes height in two dimensions, respectively.

The depth information may relate to a, in particular perpendicular, distance of at least one surface of at least one, in particular scene, object from a, in particular the, viewpoint.

The phrase "distance information" may be used synonymously for the phrase "depth information".

The depth information may be different and/or independent and/or complementary and/or correlated to the brightness and/or color information.

The term "combining" may be used synonymously for the term "fusing".

Step b) may be performed before, simultaneously with and/or after step a).

Step c) may be performed after step a) and step b).

The method, in particular step a), step b) and/or step c), may be performed again and/or repeatedly, in particular multiple times.

In particular step b) may comprise non-contact measuring of the region. In particular the non-contact measuring may use ultrasound.

Step b) comprises: acquiring the map comprising the depth information by a time-of-flight measurement. This enables a very quick and/or simple acquiring and/or an easy, in particular low computational load, processing of the acquired map.

The image and the map are acquired in top view or from a top or upper, respectively, side or above, respectively. In other words: the light may be received from below. This enables acquiring the image comprising meaningful brightness and/or color information and/or the map comprising meaningful depth information, in particular and thus determining meaningful container information. In particular the term "important" or "relevant" may be used synonymously for the term "meaningful".

The container information is about, in particular is, an absence or a presence of a laboratory sample in or contained by, respectively, the container, and/or a level of the sample in the container. The container has an opening at a top or upper, respectively, end. In particular the opening may be defined by an end of a wall and/or a circumference of the container. The container or its opening, respectively, is open, or closed, in particular by a cap. Additionally, the container information is about, in particular is, an absence or a presence of the container in the region, a position of the container, in particular in the region, and/or a presence or an absence of the cap on, in particular top of, the container. This enables handling the container. In particular step a) may comprise: acquiring the image of the carrier, if present, the container, if present, the cap, if present, and/or the sample, if present. Additionally or alternatively step b) may comprise: acquiring the map of the carrier, if present, the container, if present, the cap, if present, and/or the sample, if present. Further additionally or alternatively the term "location" or "place" may be used synonymously for the term "position". Further additionally or alternatively the cap may comprise rubber and/or plastic or may completely consist of rubber and/or plastic. Further additionally or alternatively the cap may have a blue color. Further additionally or alternatively the cap may be embodied as a lid, in particular as a rigid lid, or as a foil, in particular a flexible foil. Further additionally or alternatively the sample may be a liquid sample and/or a blood sample or a urine sample. In particular the blood sample may have a red color and/or the urine sample may have a yellow color. Further additionally or alternatively typically the sample may not fill the container completely, in particular up to the opening. Further additionally or alternatively the map may have two dimensions and one additional, third dimension, wherein the third dimension may relate to a height parallel to a longitudinal axis of the container over two directions, which may be perpendicular to the axis and/or parallel to a plane defined by the opening. In particular the term "vertical" may be used synonymously for the term "longitudinal". Further additionally or alternatively for the different cases the image and the map, in particular each, may be distinctly different.

The method comprises the step:
d) transporting or moving, respectively, gripping, capping, filling and/or defilling the container based on or in dependence of, respectively, the determined container information.

Additionally, the method comprises the step:
d) decapping the container based on or in dependence of, respectively, the determined container information.

This, in particular the fusing the brightness and/or color information and the depth information, enables handling the container accurately and/or reliably and/or with less uncertainty, in particular than would be possible when only one such information was used individually.

In particular the handling may be automatically.

According to an embodiment of the invention, step a) comprises: acquiring the image comprising the brightness and/or color information by detecting visible light, in particular red light, green light and blue light. Additionally or alternatively step b) comprises: acquiring the map comprising the depth information by detecting infrared light, in particular near-infrared light. Such a light enables to have interacted with an, in particular the, object in the region, in particular to be reflected by the object. Additionally or alternatively the visible light and the infrared light enable to not disturb each other's detecting. In particular the term "sensing" or "receiving" may be used synonymously for the term "detecting". Additionally or alternatively the, in particular respective, detecting may be automatically or a detecting of a, in particular respective, intensity of the light. Further additionally or alternatively, the visible light may have a wavelength in the range of 400 to 700 nm (nanometers). Further additionally or alternatively, the infrared light may have a wavelength longer than those of the visible light and/or in the range of 700 nm to 1 mm (millimeter), in particular to 1.4 µm (micrometer).

In particular step c), in particular the method, may not or does not have to be, in particular performed, by photogrammetry.

In particular the image and the map may be acquired by separate devices, in particular cameras.

According to an embodiment of the invention, the image and the map are acquired by a, in particular same or identical, respectively, 3D camera, in particular a range camera, in particular a time-of-flight camera. This enables acquiring the image and the map from a, in particular the, same or identical viewpoint and/or, in particular thus, an easy, in particular low computational load, processing of the acquired image and the acquired map. In particular the 3D camera may be electric, in particular electronic. Additionally or alternatively the image and/or the map may not or does not have to be acquired by a stereo camera. Further additionally or alternatively the depth information may relate to or represent a, in particular perpendicular, distance of at least one surface of at least one, in particular scene, object and a plane of the, in particular scene, 3D camera.

According to an embodiment of the invention, step c) comprises: extracting the brightness and/or color information from the image and/or the depth information from the map in form of features. Additionally or alternatively step c) comprises: classifying the, in particular extracted, brightness and/or color information and/or the, in particular extracted, depth information and fusing the classified brightness and/or color information and/or the classified depth information. This enables generating small information spaces or amount, respectively, and/or, in particular thus, a low computational load fusing. In particular the extracting and/or the classifying may be automatically. Additionally or alternatively the term "extrapolating" or "detecting" may be used synonymously for the term "extracting".

According to an embodiment of the invention, step c) is, in particular the extracting, the classifying and/or the fusing are/is, performed by an artificial neural network, rule-based decisions and/or machine learning. This enables a very good performing.

According to an embodiment of the invention, the brightness and/or color information and/or the depth information are/is about at least one boundary, in particular a brightness, color and/or depth boundary, between two spatial regions occupied by different matter. This enables the extracting the brightness and/or color information from the image and/or the depth information from the map in form of the features formed by the at least one boundary. In particular the term "edge" may be used synonymously for the term "boundary". Additionally or alternatively the phrase "spatial phases" may be used synonymously for the phrase "spatial regions". Further additionally or alternatively the term "material" may be used synonymously for the term "matter".

The invention further relates to a laboratory system for determining, in particular the, at least one container information about a, in particular the, laboratory sample container, in particular for performing the method according to the invention, wherein the system comprises an acquiring device and a determining device. The acquiring device is configured for acquiring an, in particular the, image comprising a, in particular the, brightness and/or color information of a, in particular the, possible region of the container and a, in particular the, map comprising a, in particular the, depth information of the region. The determining device is configured for determining the container information by fusing the brightness and/or color information and the depth information.

The acquiring the map comprising the depth information of the region comprises: acquiring the map comprising the depth information by a time-of-flight-measurement. The image and the map are acquired in top view. The container information is about an absence or a presence of a laboratory sample in the container and/or a level of the sample in the container. The container has an opening at a top end. The container or its opening, respectively, is open.

The laboratory system comprises a handling device. The handling device is configured for transporting, gripping, capping, filling and/or defiling the container based on the determined container information. Additionally, the handling device is configured for decapping the container based on the determined container information. In particular the handling device may be electric. Additionally or alternatively the handling device may comprise or be a transporter or mover, respectively, in particular the carrier, a gripper, a decapper, a capper, a filler and/or a defiller. In particular the mover may be configured for moving the container with respect or in relation, respectively, to the acquiring device. Additionally or alternatively the mover may comprise or be a conveyor belt or band and/or a laboratory sample distribution system as described in EP 2 995 958 A1.

By this system, the same advantages as discussed above with regard to the method may be achieved.

In particular the system, the acquiring device and/or the determining device may be electric, in particular electronic.

The acquiring device may comprise or be a detector or sensor, respectively, in particular at least two detectors.

The determining device may comprise or be a processor and/or a memory.

The term "adapted" or "designed" may be used synonymously for the term "configured".

The carrier may be configured for carrying the container aligned with respect or in relation, respectively, to the acquiring device.

### BRIEF DESCRIPTION OF THE DRAWINGS

In the following, embodiments of the invention will be described in detail with reference to the drawings. Throughout the drawings, the same elements will be denoted by the same reference numerals.
- Fig. 1: shows a method and a laboratory system for determining at least one container information about a laboratory sample container, wherein the container is absent and a carrier for carrying the container is absent,
- Fig. 2: shows the method and the system of Fig. 1, wherein the carrier is present and the container is absent,
- Fig. 3: shows the method and the system of Fig. 1, wherein the carrier is present, the container is present, a cap is absent and a laboratory sample is absent,
- Fig. 4: shows the method and the system of Fig. 1, wherein the carrier is present, the container is present, the cap is absent and the sample is present,
- Fig. 5: shows the method and the system of Fig. 1, wherein the carrier is present, the container is present and the cap is present, and
- Fig. 6: shows details of the method and the system of Fig. 1.

### DETAILED DESCRIPTION OF EMBODIMENTS OF THE INVENTION

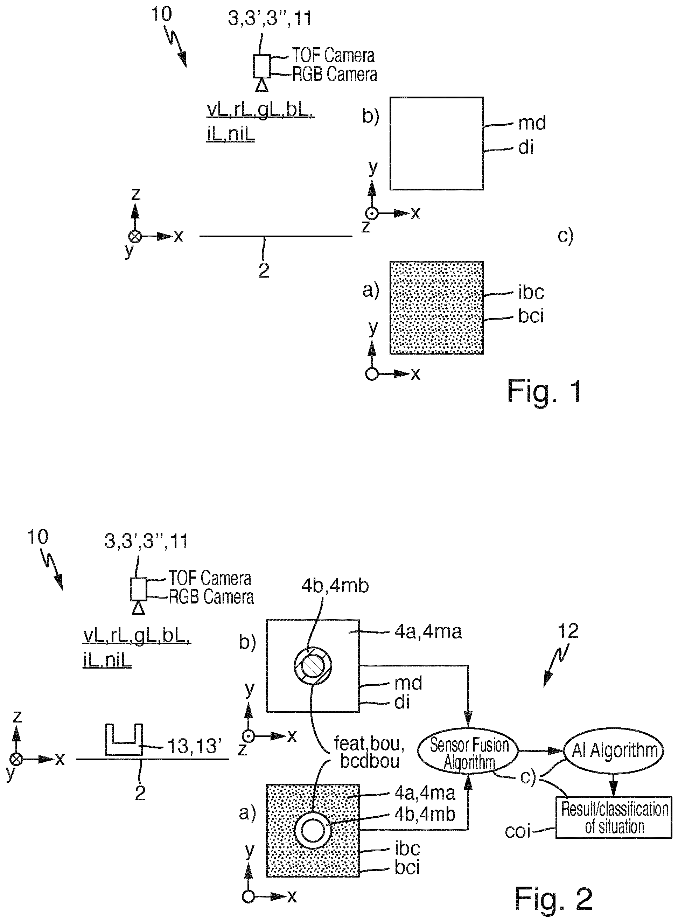

Fig. 1 to 6 show a laboratory system 10 and a method for determining at least one container information coi about a laboratory sample container 1.

The system 10 comprises an acquiring device 11 and a determining device 12. The acquiring device 11 is configured for acquiring an image ibc comprising a brightness and/or color information bci of a possible region 2 of the container 1 and a map md comprising a depth information di of the region 2, in particular acquires. The determining device 12 is configured for determining the container information coi by fusing the brightness and/or color information bci and the depth information di, in particular determines.

The method comprises the steps:
a) acquiring the image ibc comprising the brightness and/or color information bci of the possible region 2 of the container 1, in particular by the acquiring device 11,
b) acquiring the map md comprising the depth information di of the region 2, in particular by the acquiring device 11, and
c) determining the container information coi by fusing the brightness and/or color information bci and the depth information di, in particular by the determining device 12.

In detail step a) comprises: acquiring the image ibc comprising the brightness and/or color information bci by detecting visible light vL, in particular red light rL, green light gL and blue light bL. Additionally or alternatively step b) comprises: acquiring the map md comprising the depth information di by detecting infrared light iL, in particular near-infrared light niL.

Furthermore, step b) comprises: acquiring the map md comprising the depth information di by a time-of-flight measurement TOF.

Moreover, the image ibc and the map md are acquired by a 3D camera 3, in particular a range camera 3', in particular a time-of-flight camera 3", in particular of the system 10, in particular the acquiring device 11.

In particular the system 10, in particular the acquiring device 11, comprises a RGB camera (red, green and blue). In the shown embodiment the 3D camera and the RGB camera are included into only one camera. In alternative embodiments the 3D camera and the RGB camera may be two cameras on one position or multiple positions.

Further, the image ibc and the map md are acquired in top view.

Furthermore, step c) comprises: extracting the brightness and/or color information bci from the image ibc and/or the depth information di from the map md in form of features feat, in particular by the determining device 12. Additionally or alternatively step c) comprises: classifying the, in particular extracted, brightness and/or color information bci and/or the, in particular extracted, depth information di and fusing the classified brightness and/or color information bci and/or the classified depth information di, in particular by the determining device 12.

Moreover, step c) is, in particular the extracting, the classifying and/or the fusing are/is, performed by an artificial neural network AI, rule-based decisions and/or machine learning, in particular by the determining device 12.

Further, the brightness and/or color information bci and/or the depth information di are/is about at least one boundary bou, in particular a brightness, color and/or depth boundary bcdbou, in particular forming the features feat, between two spatial regions 4a, 4b occupied by different matter 4ma, 4mb.

In the shown embodiment the acquiring device 11 and/or the 3D camera 2 is above the region 2. The region 2 extends in an x-y-plane. A height is given along a z-axis, in particular perpendicular to the x-y-plane.

In Fig. 1 nothing is present, in particular on a black and flat underground. Thus, the image ibc shows nothing and the map md shows a homogenous depth or height, respectively. Thus, the container information coi is about an absence of a part of a handling device 13 comprising a container carrier 13' for carrying the container 1 and an absence of the container 1 in the region 2.

In Fig. 2 the carrier 13', in particular in form of an empty tube holder, is present, in particular on the underground. Thus, the image ibc shows an inner, in particular white, circle being surrounded by a, in particular white, ring, in particular which corresponds to the cross-section of the carrier 13' shown in the left of Fig. 2. The map md shows a lower inner part, in particular corresponding to the inner circle, and a higher surrounding elevated part, in particular corresponding to the surrounding ring.

Thus, from the image ibc and from the map md, in particular each, a boundary bou between the inner circle or the lower inner part, respectively, and the surrounding ring or the higher surrounding elevated part, respectively, and another boundary bou between the surrounding ring and the background are extracted.

Thus, the container information coi is about the presence of the carrier 13' and the absence of the container 1 in the region 2.

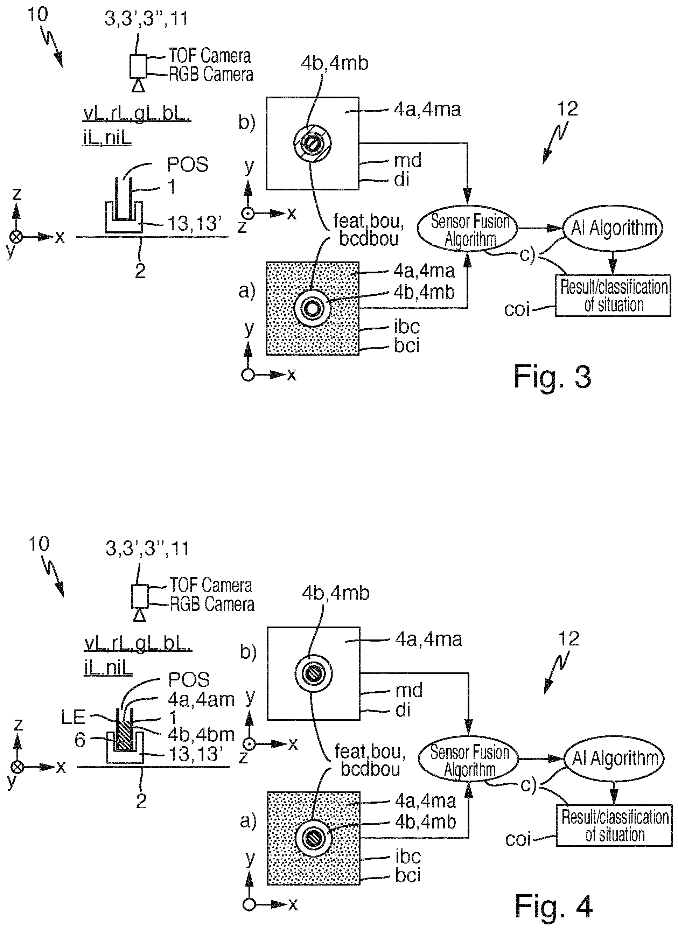

In Fig. 3 the carrier 13' and the container 1, in particular in form of an empty tube, are present, in particular the container 1 in the carrier 13'. Thus, the image ibc shows a narrower inner, in particular colorless, circle being surrounded by a narrower, in particular colorless, ring being surrounded by another, in particular white, ring, in particular which corresponds to the cross-section of the container 1 and the carrier 13' shown in the left of Fig. 3. The map md shows a narrower lower inner part, in particular corresponding to the inner circle, a narrower higher surrounding elevated part, in particular corresponding to the surrounding ring, and a lower surrounding elevated part, in particular corresponding to the another surrounding ring.

Thus, from the image ibc and from the map md, in particular each, a boundary bou between the inner circle or the lower inner part, respectively, and the surrounding ring or the higher surrounding elevated part, respectively, another boundary bou between the surrounding ring and the another surrounding ring or the lower surrounding elevated part, respectively, and another boundary bou between the another surrounding ring and the background are extracted.

Thus, the container information coi is about the presence of the carrier 13', the presence of the container 1 in the region 2, the position POS of the container 1, the absence of a cap 5 on the container 1 and the absence of a laboratory sample 6 in the container 1.

In Fig. 4 the carrier 13', the container 1, in particular in form of a filled tube, and the sample 6 are present, in particular the sample 6 in the container 1. Thus, the image ibc shows an inner, in particular red or yellow, circle being surrounded by a, in particular colorless, ring being surrounded by another, in particular white, ring, in particular which corresponds to the cross-section of the sample 6, the container 1 and the carrier 13' shown in the left of Fig. 4. The map md shows a less lower inner part, in particular corresponding to the inner circle, a higher surrounding elevated part, in particular corresponding to the surrounding ring, and a lower surrounding elevated part, in particular corresponding to the another surrounding ring.

Thus, from the image ibc and from the map md, in particular each, a boundary bou between the inner circle or the less lower inner part, respectively, and the surrounding ring or the higher surrounding elevated part, respectively, another boundary bou between the surrounding ring and the another surrounding ring or the lower surrounding elevated part, respectively, and another boundary bou between the another surrounding ring and the background are extracted.

Thus, the container information coi is about the presence of the carrier 13', the presence of the container 1 in the region 2, the position POS of the container 1, the absence of the cap 5 on the container 1, the presence of the sample 6 in the container 1 and the level LE of the sample 6 in the container 1.

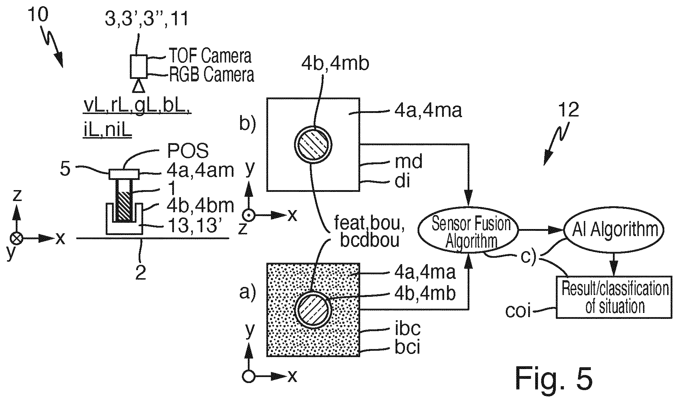

In Fig. 5 the carrier 13', the container 1, in particular in form of a capped tube, the sample 6 and the cap 5 are present, in particular the cap 5 on the container 1.Thus, the image ibc shows a wider inner, in particular blue, circle being surrounded by a, in particular white, ring, in particular which corresponds to the cross-section of the cap 5 on the container 1 and the carrier 13' shown in the left of Fig. 5. The map md shows a wider higher inner part, in particular corresponding to the inner circle, and a lower surrounding elevated part, in particular corresponding to the surrounding ring.

Thus, from the image ibc and from the map md, in particular each, a boundary bou between the inner circle or the higher inner part, respectively, and the surrounding ring or the lower surrounding elevated part, respectively, and another boundary bou between the surrounding ring and the background are extracted.

Thus, the container information coi is about the presence of the carrier 13', the presence of the container 1 in the region 2, the position POS of the container 1 and the presence of the cap 5 on the container 1.

Furthermore, the laboratory system 10 comprises the handling device 13. The handling device 13 is configured for handling the container 1 based on the determined container information coi, in particular handles.

Moreover, the method comprises the step: d) handling the container 1 based on the determined container information coi, in particular transporting or moving, respectively, gripping, decapping, capping, filling and/or defilling the container 1, in particular by the handling device 13.

In the shown embodiment the handling device 13 comprises the carrier 13. Such a handling device 13 is used in order to transport the container 1 on the underground or a transport plane, respectively. In particular the carrier 13' may be only a part, in particular of the handling device, that is movable by external means. For example the carrier 13' may comprise a magnet and electromagnetic actuators may be positioned below the transport plane in order to drive the carrier 13'. Thus, the combination of the electromagnetic actuators and the carrier 13' can be regarded as the handling device 13.

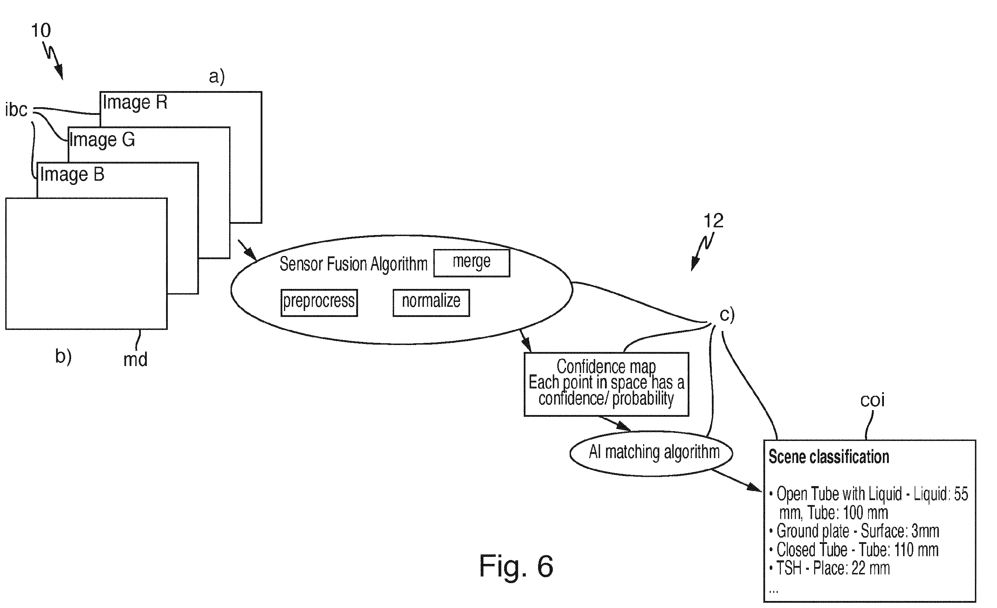

Fig. 6 shows further details of the relevant information or signal, respectively processing. The image ibc comprises three sub-images corresponding to the three colors red (R), green (G), and blue (B). In principle, also other colors may be used. This information, in particular the brightness and/or color information bci, and the depth information di is delivered to a sensor fusion algorithm, which preprocesses, normalizes and/or merges this information. A confidence map is obtained, in which each point in space has a confidence and/or a probability. Furthermore, an Al matching algorithm produces the container information coi, which comprises a scene classification. For example, the following may be output: open tube with liquid - a height of the liquid, for example 55 mm, and/or a height of the tube, for example 100 mm; underground or underground plate, respectively - a height of the surface, for example 3 mm; closed tube- a height of the closed tube, for example 110 mm; and/or carrier - a height of a surface of the carrier, for example 22 mm.

This enables the system to know, whether the tube is overfilled or not, in particular to avoid spilling. Additionally or alternatively this enables to ensure, that the cap really has been removed, in particular for successful aliquoting. Further additionally or alternatively this enables to ensure, that the cap is present, in particular for storage and/or centrifugation. Further additionally or alternatively this enables to ensure a precise enough placement of the tube by the carrier, in particular to allow a gripper to take the tube.

As the shown and above discussed embodiments reveal, the invention provides a method and a laboratory system, in particular each, for determining at least one container information about a laboratory sample container, in particular having improved properties.

## Claims

1. Method for determining at least one container information (coi) about a laboratory sample container (1), wherein the method comprises the steps:
a) acquiring an image (ibc) comprising a brightness and/or color information (bci) of a possible region (2) of the container (1),
b) acquiring a map (md) comprising a depth information (di) of the region (2), and
c) determining the container information (coi) by fusing the brightness and/or color information (bci) and the depth information (di),
- **characterized by**:
- wherein step b) comprises: acquiring the map (md) comprising the depth information (di) by a time-of-flight-measurement (TOF),
- wherein the image (ibc) and the map (md) are acquired in top view, and
- wherein the container information (coi) is about an absence or a presence of a laboratory sample (6) in the container (1) and/or a level (LE) of the sample (6) in the container (1), wherein the container has an opening at a top end, wherein the container or its opening, respectively, is open, and
- wherein the method comprises the step:
d) transporting, gripping, capping, filling and/or defilling the container (1) based on the determined container information (coi).

2. Method according to the preceding claim,
- wherein step a) comprises: acquiring the image (ibc) comprising the brightness and/or color information (bci) by detecting visible light (vL), and/or
- wherein step b) comprises: acquiring the map (md) comprising the depth information (di) by detecting infrared light (iL).

3. Method according to any one of the preceding claims,
- wherein the image (ibc) and the map (md) are acquired by a 3D camera (3).

4. Method according to any one of the preceding claims,
- wherein step c) comprises: extracting the brightness and/or color information (bci) from the image (ibc) and/or the depth information (di) from the map (md) in form of features (feat), and/or
- wherein step c) comprises: classifying the brightness and/or color information (bci) and/or the depth information (di) and fusing the classified brightness and/or color information (bci) and/or the classified depth information (di).

5. Method according to any one of the preceding claims,
- wherein step c) is performed by an artificial neural network (AI), rule-based decisions and/or machine learning.

6. Method according to any one of the preceding claims,
- wherein the brightness and/or color information (bci) and/or the depth information (di) are/is about at least one boundary (bou) between two spatial regions (4a, 4b) occupied by different matter (4ma, 4mb).

7. Method according to any one of the preceding claims,
- wherein the container information (coi) is about an absence or a presence of the container (1) in the region (2), a position (POS) of the container (1), and/or a presence or an absence of a cap (5) on the container (1).

8. Method according to any one of the preceding claims, wherein the method comprises the step:
d) decapping the container (1) based on the determined container information (coi).

9. Laboratory system (10) for determining at least one container information (coi) about a laboratory sample container (1), wherein the system (10) comprises:
- an acquiring device (11), wherein the acquiring device (11) is configured for acquiring an image (ibc) comprising a brightness and/or color information (bci) of a possible region (2) of the container (1) and a map (md) comprising a depth information (di) of the region (2), and
- a determining device (12), wherein the determining device (12) is configured for determining the container information (coi) by fusing the brightness and/or color information (bci) and the depth information (di),
- **characterized by**:
- wherein the acquiring the map (md) comprising the depth information (di) of the region (2) comprises: acquiring the map (md) comprising the depth information (di) by a time-of-flight-measurement (TOF),
- wherein the image (ibc) and the map (md) are acquired in top view, and
- wherein the container information (coi) is about an absence or a presence of a laboratory sample (6) in the container (1) and/or a level (LE) of the sample (6) in the container (1), wherein the container has an opening at a top end, wherein the container or its opening, respectively, is open, and
- wherein the system (10) comprises:
- a handling device (13), wherein the handling device (13) is configured for transporting, gripping, capping, filling and/or defiling the container (1) based on the determined container information (coi).

10. Laboratory system (10) according to the preceding claim,
- wherein the handling device (13) is configured for decapping the container (1) based on the determined container information (coi).

## Patentansprüche

1. Verfahren zur Bestimmung mindestens einer Behälterinformation (coi) über einen Laborprobenbehälter (1), wobei das Verfahren die folgenden Schritte umfasst:
a) Erfassen eines Bildes (ibc), das eine Helligkeits- und/oder Farbinformation (bci) eines möglichen Bereichs (2) des Behälters (1) umfasst,
b) Erfassen einer Karte (md), die eine Tiefeninformation (di) des Bereichs (2) umfasst, und
c) Bestimmen der Behälterinformation (coi) durch Fusionieren der Helligkeits- und/oder Farbinformation (bci) und der Tiefeninformation (di),
- **gekennzeichnet durch**:
- wobei Schritt b) Folgendes umfasst: Erfassen der Karte (md), die die Tiefeninformation (di) umfasst, durch eine Laufzeitmessung (TOF),
- wobei das Bild (ibc) und die Karte (md) in Draufsicht erfasst werden und
- wobei es sich bei der Behälterinformation (coi) um eine Abwesenheit oder ein Vorhandensein einer Laborprobe (6) in dem Behälter (1) und/oder ein Niveau (LE) der Probe (6) in dem Behälter (1) handelt, wobei der Behälter eine Öffnung an einem oberen Ende aufweist, wobei der Behälter bzw. seine Öffnung offen ist und
- wobei das Verfahren den folgenden Schritt umfasst:
d) Transportieren, Greifen, Verschließen, Füllen und/oder Entfüllen des Behälters (1) basierend auf der bestimmten Behälterinformation (coi).

2. Verfahren nach dem vorhergehenden Anspruch,
- wobei Schritt a) Folgendes umfasst: Erfassen des Bildes (ibc), das die Helligkeits- und/oder Farbinformation (bci) umfasst, durch Detektieren von sichtbarem Licht (vL),
und/oder
- wobei Schritt b) Folgendes umfasst: Erfassen der Karte (md), die die Tiefeninformation (di) umfasst, durch Detektieren von Infrarotlicht (iL).

3. Verfahren nach einem der vorhergehenden Ansprüche,
- wobei das Bild (ibc) und die Karte (md) durch eine 3D-Kamera (3) erfasst werden.

4. Verfahren nach einem der vorhergehenden Ansprüche,
- wobei Schritt c) Folgendes umfasst: Extrahieren der Helligkeits- und/oder Farbinformation (bci) aus dem Bild (ibc) und/oder der Tiefeninformation (di) aus der Karte (md) in Form von Merkmalen (feat), und/oder
- wobei Schritt c) Folgendes umfasst: Klassifizieren der Helligkeits- und/oder Farbinformation (bci) und/oder der Tiefeninformation (di) und Fusionieren der klassifizierten Helligkeits- und/oder Farbinformation (bci) und/oder der klassifizierten Tiefeninformation (di).

5. Verfahren nach einem der vorhergehenden Ansprüche,
- wobei Schritt c) durch ein künstliches neuronales Netz (AI), regelbasierte Entscheidungen und/oder maschinelles Lernen durchgeführt wird.

6. Verfahren nach einem der vorhergehenden Ansprüche,
- wobei die Helligkeits- und/oder Farbinformation (bci) und/oder die Tiefeninformation (di) über mindestens eine Grenze (bou) zwischen zwei räumlichen Bereichen (4a, 4b), die mit unterschiedlicher Materie (4ma, 4mb) besetzt sind, ist/sind.

7. Verfahren nach einem der vorhergehenden Ansprüche,
- wobei es sich bei der Behälterinformation (coi) um eine Abwesenheit oder ein Vorhandensein des Behälters (1) in dem Bereich (2), eine Position (POS) des Behälters (1) und/oder ein Vorhandensein oder eine Abwesenheit einer Kappe (5) auf dem Behälter (1) handelt.

8. Verfahren nach einem der vorhergehenden Ansprüche, wobei das Verfahren den folgenden Schritt umfasst:
d) Entkappen des Behälters (1) basierend auf der bestimmten Behälterinformation (coi).

9. Laborsystem (10) zur Bestimmung mindestens einer Behälterinformation (coi) über einen Laborprobenbehälter (1), wobei das System (10) Folgendes umfasst:
- eine Erfassungsvorrichtung (11), wobei die Erfassungsvorrichtung (11) zum Erfassen eines Bildes (ibc), das eine Helligkeits- und/oder Farbinformation (bci) eines möglichen Bereichs (2) des Behälters (1) umfasst, und einer Karte (md), die eine Tiefeninformation (di) des Bereichs (2) umfasst, konfiguriert ist, und
- eine Bestimmungsvorrichtung (12), wobei die Bestimmungsvorrichtung (12) zum Bestimmen der Behälterinformation (coi) durch Fusionieren der Helligkeits- und/oder Farbinformation (bci) und der Tiefeninformation (di) konfiguriert ist,
- **gekennzeichnet durch**:
- wobei das Erfassen der Karte (md), die die Tiefeninformation (di) des Bereichs (2) umfasst, Folgendes umfasst: Erfassen der Karte (md), die die Tiefeninformation (di) umfasst, durch eine Laufzeitmessung (TOF),
- wobei das Bild (ibc) und die Karte (md) in Draufsicht erfasst werden und
- wobei es sich bei der Behälterinformation (coi) um eine Abwesenheit oder ein Vorhandensein einer Laborprobe (6) in dem Behälter (1) und/oder ein Niveau (LE) der Probe (6) in dem Behälter (1) handelt, wobei der Behälter eine Öffnung an einem oberen Ende aufweist, wobei der Behälter bzw. seine Öffnung offen ist und
- wobei das System (10) Folgendes umfasst:
- eine Handhabungsvorrichtung (13), wobei die Handhabungsvorrichtung (13) zum Transportieren, Greifen, Verschließen, Füllen und/oder Entfüllen des Behälters (1) basierend auf der bestimmten Behälterinformation (coi) konfiguriert ist.

10. Laborsystem (10) nach dem vorhergehenden Anspruch,
- wobei die Handhabungsvorrichtung (13) zum Entkappen des Behälters (1) basierend auf der bestimmten Behälterinformation (coi) konfiguriert ist.

## Revendications

1. Procédé permettant de déterminer au moins des informations de récipient (coi) relatives à un récipient d'échantillons de laboratoire (1), dans lequel le procédé comprend les étapes :
a) acquisition d'une image (ibc) comprenant des informations de luminosité et/ou de couleur (bci) d'une région (2) possible du récipient (1),
b) acquisition d'une carte (md) comprenant des informations de profondeur (di) de la région (2), et
c) détermination des informations de récipient (coi) en fusionnant les informations de luminosité et/ou de couleur (bci) et les informations de profondeur (di),
- **caractérisé par** :
- dans lequel l'étape b) comprend : l'acquisition de la carte (md) comprenant les informations de profondeur (di) par une mesure de temps de vol (TOF),
- dans lequel l'image (ibc) et la carte (md) sont acquises en vue du dessus, et
- dans lequel les informations de récipient (coi) sont relatives à une absence ou une présence d'un échantillon de laboratoire (6) dans le récipient (1) et/ou un niveau (LE) de l'échantillon (6) dans le récipient (1), dans lequel le récipient a une ouverture au niveau d'une extrémité supérieure, dans lequel le récipient ou son ouverture, respectivement, est ouvert(e), et
- dans lequel le procédé comprend l'étape :
d) transport, préhension, bouchage, remplissage et/ou vidage du récipient (1) en se basant sur les informations de récipient (coi) déterminées.

2. Procédé selon la revendication précédente,
- dans lequel l'étape a) comprend : l'acquisition de l'image (ibc) comprenant les informations de luminosité et/ou de couleur (bci) en détectant la lumière visible (vL), et/ou
- dans lequel l'étape b) comprend : l'acquisition de la carte (md) comprenant les informations de profondeur (di) en détectant la lumière infrarouge (iL).

3. Procédé selon l'une quelconque des revendications précédentes,
- dans lequel l'image (ibc) et la carte (md) sont acquises par une caméra 3D (3).

4. Procédé selon l'une quelconque des revendications précédentes,
- dans lequel l'étape c) comprend : l'extraction des informations de luminosité et/ou de couleur (bci) de l'image (ibc) et/ou des informations de profondeur (di) de la carte (md) sous forme de caractéristiques (feat), et/ou
- dans lequel l'étape c) comprend : le classement des informations de luminosité et/de couleur (bci) et/ou des informations de profondeur (di) et la fusion des informations de luminosité et/ou de couleur (bci) classées et/ou des informations de profondeur (di) classées.

5. Procédé selon l'une quelconque des revendications précédentes,
- dans lequel l'étape c) est réalisée par un réseau neuronal artificiel (IA), des décisions basées sur des règles et/ou un apprentissage machine.

6. Procédé selon l'une quelconque des revendications précédentes,
- dans lequel les informations de luminosité et/ou de couleur (bci) et/ou les informations de profondeur (di) sont relatives à au moins une frontière (bou) entre deux régions spatiales (4a, 4b) occupées par des matières (4ma, 4mb) différentes.

7. Procédé selon l'une quelconque des revendications précédentes,
- dans lequel les informations de récipient (coi) sont relatives à une absence ou une présence du récipient (1) dans la région (2), une position (POS) du récipient (1) et/ou une présence ou une absence d'un capuchon (5) sur le récipient (1).

8. Procédé selon l'une quelconque des revendications précédentes, dans lequel le procédé comprend l'étape :
d) débouchage du récipient (1) en se basant sur les informations de récipient (coi) déterminées.

9. Système de laboratoire (10) permettant de déterminer au moins des informations de récipient (coi) relatives à un récipient d'échantillons de laboratoire (1), dans lequel le système (10) comprend :
- un dispositif d'acquisition (11), dans lequel le dispositif d'acquisition (11) est configuré pour acquérir une image (ibc) comprenant des informations de luminosité et/ou de couleur (bci) d'une région (2) possible du récipient (1) et une carte (md) comprenant des informations de profondeur (di) de la région (2), et
- un dispositif de détermination (12), dans lequel le dispositif de détermination (12) est configuré pour déterminer les informations de récipient (coi) en fusionnant les informations de luminosité et/ou de couleur (bci) et les informations de profondeur (di),
- **caractérisé par** :
- dans lequel l'acquisition de la carte (md) comprenant les informations de profondeur (di) de la région (2) comprend : l'acquisition de la carte (md) comprenant les informations de profondeur (di) par une mesure de temps de vol (TOF),
- dans lequel l'image (ibc) et la carte (md) sont acquises en vue du dessus, et
- dans lequel les informations de récipient (coi) sont relatives à une absence ou une présence d'un échantillon de laboratoire (6) dans le récipient (1) et/ou un niveau (LE) de l'échantillon (6) dans le récipient (1), dans lequel le récipient a une ouverture au niveau d'une extrémité supérieure, dans lequel le récipient ou son ouverture, respectivement, est ouvert(e), et
- dans lequel le système (10) comprend :
- un dispositif de manipulation (13), dans lequel le dispositif de manipulation (13) est configuré pour transporter, attraper, boucher, remplir et/ou vider le récipient (1) en se basant sur les informations de récipient (coi) déterminées.

10. Système de laboratoire (10) selon la revendication précédente,
- dans lequel le dispositif de manipulation (13) est configuré pour déboucher le récipient (1) en se basant sur les informations de récipient (coi) déterminées.
